# EUROPEAN PATENT APPLICATION

(11) **EP 4 206 034 A1**
(43) Date of publication of application: **05.07.2023**
(21) Application number: 21218339.6
(22) Date of filing: 30.12.2021
(51) Int. Cl.: B60L 58/12, B60L 58/13, H02J 7/00

(54) **MINING VEHICLE CONTROL**

(71) Applicant: Sandvik Mining and Construction Oy, 33330 Tampere (FI)
(72) Inventor: Siivonen, Lauri, 36120 Suinula (FI)
(74) Representative: Sandvik

(57) **Abstract**

According to an example aspect of the present invention, there is provided an apparatus and method to control mining vehicles, in particular as electric mining vehicles, taking into account the state of charge the batteries of said mining vehicles.

## Description

### FIELD

The present invention relates to mining operations and mining-related task management, and in particular to managing the state of charge of a battery of at least one vehicle, such as a mining vehicle.

### BACKGROUND

Mining or construction excavation worksites, such as hard rock or soft rock mines, may comprise areas for automated operation of mobile vehicles, herein referred to as vehicles. A vehicle may be an unmanned vehicle, for example, remotely controlled from a control room, or a manned vehicle, for example, operated by an operator in a cabin of the mobile vehicle. An automated vehicle operating in an automatic mode may operate independently without external control but may be taken under external control at certain operation areas or conditions, such as during states of emergencies.

Vehicles may comprise one or more sensors for scanning environment of the vehicle, to detect obstacles and/or tunnel wall surface, for example. Such sensors, such as two- or three-dimensional laser scanners, may be referred to as environment scanning sensors. Position tracking may be arranged particularly in underground mines on the basis of scanning data from the sensor(s) and a predefined environmental model.

Mining vehicles may comprise a battery, wherein energy is stored for use by the vehicle. The stored energy may be used for, for example, propulsion. For such vehicles, management of the battery state of charge is required to ensure good performance of the vehicle, especially when operating in an automatic mode.

### SUMMARY OF THE INVENTION

The invention is defined by the features of the independent claims. Some specific embodiments are defined in the dependent claims.

According to a first aspect of the present invention, there is provided an apparatus for controlling at least one autonomous mining vehicle, the apparatus comprising at least one processor and at least one memory including computer program code, the at least one memory and the computer program code configured to with the at least one processor, cause the apparatus at least to: detect a task for an autonomous mining vehicle comprising a battery, the task comprising task information related to the task; receive information on at least one characteristic of environment relating to the task; estimate, based on the task information and the information on the at least one characteristic of the environment, a change of a state of charge of the battery of the autonomous mining vehicle, wherein said change of a state of charge is related to the task; determine, based on the estimated change of the state of charge, a target value for a state of charge of the battery of the autonomous mining vehicle, the target value comprising a state of charge of the battery at a predetermined phase of the task; and control at least one autonomous mining vehicle based on the determined target value

According to a second aspect of the present invention, there is provided a method for controlling at least one autonomous mining vehicle, the method comprising: detecting a task for an autonomous mining vehicle comprising a battery, the task comprising task information related to the task; receiving information on at least one characteristic of environment relating to the task; estimating, based on the task information and the information on the at least one characteristic of the environment, a change of a state of charge of the battery of the autonomous mining vehicle, wherein said change of a state of charge is related to the task; determining, based on the estimated change of the state of charge, a target value for a state of charge of the battery of the autonomous mining vehicle, the target value comprising a state of charge of the battery at a predetermined phase of the task; and controlling at least one autonomous mining vehicle based on the determined target value.

According to a third aspect, there is provided an apparatus comprising at least one processor, at least one memory including computer program code, the at least one memory and the computer program code being configured to, with the at least one processor core, provide the means for the apparatus and/or cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates a schematic view of an example vehicle at a worksite comprising an underground tunnel system;
FIGURE 2 illustrates a schematic view of an example vehicle at a worksite comprising a sloped surface;
FIGURES 3A and 3B illustrate example methods capable of supporting at least some embodiments of the present invention, and
FIGURE 4 illustrates an example apparatus capable of supporting at least some embodiments.

### EMBODIMENTS

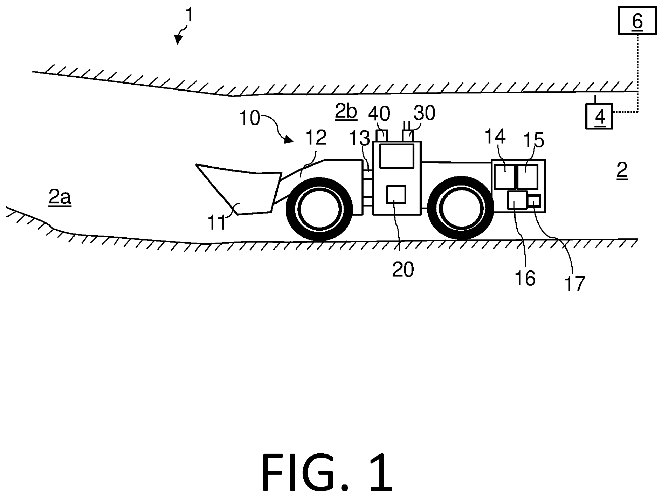

Figure 1 illustrates a simplified example of a portion of mining worksite 1, in the present example comprising an underground (tunnel) portion or tunnel 2, comprising sloped portion 2a and flat portion 2b. The mining worksite may comprise an ore mine or a construction site, such as a railway or road tunnel site. However, it will be appreciated that a worksite may comprise only on-surface areas, only underground areas, or both surface and underground areas. The term mining vehicle herein refers generally to mobile work machines suitable to be used in the operation of different kinds of underground or surface mining or construction excavation worksites, such as lorries, dozers, dumpers, vans, mobile rock drilling or milling rigs, mobile reinforcement machines, and bucket loaders or other kind of mobile work machines which may be used in different kinds of excavation worksites.

The vehicle 10 is in the present example a loader or a load and haul (LHD) vehicle comprising a bucket 11 connected to a boom 12. The vehicle 10 may be, for example, an articulated vehicle comprising two sections connected by a joint 13. However, it will be appreciated that application of the presently disclosed features are not limited to any particular type of vehicle which may be used at excavation worksites. Some other examples of such a vehicle include inspection vehicles, autonomous inspection vehicles (AIVs), lorries, dumpers, vans, mobile rock drilling or milling rigs, or mobile reinforcement machines.

In the example of Figure 1, the vehicle 10 comprises a system 14 of pumps for generating hydraulic pressure for operating various parts of the machine, such as lifting the boom 12, turning the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box. The drivetrain of the vehicle 10 may comprise, for example, motor 15, the crank shaft, and/or a transmission.

The vehicle 10 comprises at least one control unit 20 configured to control at least some functions and/or actuators of the vehicle. The control unit 20 may comprise one or more computing units/processors executing computer program code stored in memory. The control unit 20 may be connected to one or more other control units of a control system of the vehicle, for example, by a controller area network (CAN) bus. The control unit 20 may comprise or be connected to a user interface (UI) with a display device as well as an operator input interface. Such interfaces are usable for receiving operator commands and information to the control unit. It is to be appreciated that the control unit 20 may be configured to perform at least some of the below illustrated features, or a plurality of control units or controllers may be applied to perform these features. It is to be appreciated that at least some of the control functionality may be implemented even outside the vehicle, for example, at a worksite management system.

The vehicle 10 may comprise a wireless communication device 30, by which the control unit 20 and/or another unit of control system of the vehicle 10 may be configured to establish a data connection. The data connection comprises at least one of: data reception, and/or data transmission. The data connection may be formed between the control system of the vehicle and at least one control device of a (mining operations) control system 6 external to the vehicle. The data connection may utilize a wireless connection provided by a base station or access node 4. The communication device 30 may thus be operatively connected to a communications system of the worksite, such as a wireless access system comprising a wireless local area network (WLAN) and/or a cellular communications network such as a 4G, 5G or some other generation cellular network.

The control system 6 may comprise or be connected to further network(s) and/or data processing system(s), such as a worksite management system, a cloud service, a data analytics system, an intermediate communications network, such as the internet, etc. The control system 6 may comprise or be connected to further device(s) or control unit(s), such as a handheld user unit, a vehicle unit, a worksite management device/system, a remote control and/or monitoring device, data analytics device, sensor system/device, etc.

The vehicle 10 may be unmanned. An unmanned vehicle may comprise a user interface to allow a user to control any of the functions of the vehicle, for example, steering. The vehicle may comprise an operator input interface in addition to the user interface or as an alternative to the user interface. Said interfaces of the vehicle may be located in a remote location from the vehicle and the vehicle may be remotely controlled. Examples of remote control include: control by an operator in the tunnel, or control by an apparatus within a control room at the worksite, or even control by an apparatus from a long distance away from the worksite via communications network(s). The vehicle 10 may be an automated vehicle, which in an autonomous operating or driving mode may operate/drive independently without requiring continuous user control. Such an automated vehicle may be taken under external control, for example, during states of emergencies. When the vehicle is in a manual driving mode, an operator drives the vehicle manually, by remote control or locally at the vehicle by operator controls. The operator may set the vehicle into a (default) automatic driving mode in which the vehicle is configured to automatically drive a specified route, for example, between a loading point and a dump shaft. Below disclosed features may be applied when the vehicle 10 operates in the automatic driving mode, and/or for manually operated vehicles or when the vehicle is in the manual operating mode.

A mining vehicle, such as mining vehicle 10, may be termed an autonomous mining vehicle in the context of this disclosure, whereby the vehicle is configured to perform at least one task in an autonomous manner. An autonomous mining vehicle is configured to perform at least one function of the vehicle in an automatic manner.

The vehicle 10 may comprise a positioning device or unit, such as a satellite (based) positioning unit for surface satellite-based positioning, which may also be referred to as a Global Navigation Satellite System (GNSS) device. The vehicle 10 may comprise one or more scanning units, or scanners, configured to perform scanning of environment around the vehicle. In some embodiments, the scanning results are applied to detect the position and orientation of the vehicle and one or more further elements thereof, such as the position and orientation of the scanner 40, or the bucket 11. The control unit 20, or alternatively another control/computation unit in the vehicle, may be configured to compare operational scanned tunnel profile data to reference profile data stored in an environment model. The environment model, which may also be referred to as a worksite model or map, comprises geographical features of the environment. The control unit 20 may be configured to position the vehicle on the basis of finding a match in the environment model. Scannerbased positioning may be applied in underground worksites or other areas where satellite-based positioning is unavailable.

In an embodiment, the scanner 40 may be a 2D scanner configured to monitor tunnel walls at desired height, for example. In another embodiment, the scanner 40 is a 3D scanner, in which case 3D scanning data or point cloud data is produced and applied for positioning the vehicle. Point cloud data generated based on scanning may be applied for generating and updating the worksite model. The vehicle 10 may comprise a simultaneous localization and mapping (SLAM) unit. Such a unit is configured to both position the vehicle and (augment) map the environment, such as the geographical features of the environment, based on (2D or 3D) scanning information while the vehicle is driving, for example, in an automatic mode.

A driving plan, or a route plan, may define a route to be driven by the vehicle 10 and may be used as an input for an automatic driving control of the vehicle. Further, such a plan may be used as a part of a task or planned task. When the task comprises a route plan, the plan may form the route to be travelled during the task. The plan may be generated offline and off-site, for example, in an office. The plan may be generated on-board the vehicle, for example, by a teaching drive. The plan may define a start point, an end point, and a set of route points for the automatic drive. The plan may be sent via a wired or wireless connection to the vehicle. The plan may be otherwise loaded to the vehicle, to a memory of the vehicle for access by the control unit 20, or another unit of the vehicle configured to control navigation of the vehicle along the route. In another embodiment, route points are not predefined, but the vehicle defines path and steering control so as to avoid obstacles during autonomous driving towards a destination point.

In some embodiments, positioning of the vehicle 10 is performed by dead-reckoning based positioning. The control unit 20 (or another control unit of the vehicle) may perform a dead reckoning algorithm. Such an algorithm may be configured to accumulate the vehicle's travelled distance and heading on the basis of input signal(s) indicative of vehicle wheel rotation and relative heading. Dead-reckoning (DR) refers generally to a method in which position of the vehicle 10 is estimated based on the orientation of the vehicle and the moving distance of the vehicle. Orientation may be calculated, for example, from an integration of the angular velocity measured by a gyro. Moving distance may be calculated, for example, by integrating the vehicle speed calculated from the number of pulses of a tire pulse sensor and the tire diameter. It is to be appreciated that the control unit may comprise further operational modules supplementing dead reckoning based position tracking, such as a tyre slipping and/or wear compensation module. Since error is accumulated by DR, the DR based position or positioning may be corrected by another positioning source. While the vehicle is on the surface, satellite visibility enables to correct positioning of the vehicle 10 based on position obtained by a GNSS device. Further, environment based scanning may be used to correct the DR based positioning. For example, data obtained from the scanner 40, previously obtained scanned tunnel profile data, and/or the environment model may be used to correct the positioning.

An apparatus in accordance with the present disclosure may comprise, for example: battery management system 17, control system 6, device 60, vehicle 10, controller 20, vehicle 110, a user interface device, an operator interface device. Such an apparatus may be configured to perform any of the embodiments disclosed herein.

The vehicle 10 may comprise a battery 16, wherein electrical energy is stored for use by the vehicle 10. The stored energy may be used for, for example, propulsion of the vehicle 10. For example, the battery 16 may be the primary storage of propulsive energy of the vehicle 10. The vehicle 10 may be configured to store energy within the battery 16, for example, energy produced by the vehicle 10. The vehicle 10 may produce energy, for example, when braking regeneratively, when motor braking, by using a combustion engine and/or by other means. The vehicle 10 may be configured to motor brake without using a brake system. A brake system may comprise, for example, a friction brake and/or a hydraulic brake. The battery may comprise one or more battery units. A battery unit may comprise modules. A module may comprise cells. The battery is rechargeable and provides power over a sustained period. The battery may additionally comprise any of: contactors, control electronics, fuses and/or temperature control means. Temperature control means may comprise at least one of: a fan, and/or a heater. Suitable battery types for use in the vehicle include: lithium-ion, lithium-polymer nickel-cadmium and/or nickel-metal hybrid. A battery has a state of charge, SoC, which may comprise the level of charge of the battery relative to the capacity of said battery. The state of charge may be measured from the battery via any suitable method, such as an online or offline SoC measurement, for example, open-circuit voltage (OCV) measurement and/or current integration (coulomb counting).

The vehicle 10 may comprise a battery management system, BMS, 17. The BMS may be configured to monitor the battery and/or control the use of the battery. In addition, the BMS may be configured to: collect, gather, and/or produce data relating to the battery. The BMS comprises a data transmission connection, such as a bus connection and/or an Ethernet connection. The data transmission connection may connect the BMS to the control unit 20 and/or another unit of a control system of the vehicle 10. Thereby, the BMS may be connected to other systems such as the control system 6.

A worksite may comprise at least one charging point. A charging point allows vehicles to charge their batteries using an electrical connection to the worksite power grid. The charging point and a vehicle, such as the vehicle 10, may be configured to allow autonomous charging at the charging point.

A vehicle, such as vehicle 10, may also be configured to swap at least a portion of the battery 16. In this context, swapping comprises at least one of: operatively disconnecting and removing at least a portion of the battery of the vehicle, and/or operatively connecting and attaching at least a portion of a battery to the vehicle. The vehicle may be configured to swap the battery at predetermined locations, or another vehicle may be used to transport a battery to the vehicle 10.

An apparatus, such as battery management system 17, control system 6, device 60, vehicle 10, controller 20, vehicle 110, may be configured to provide information. Providing information may comprise at least one of: forming a data connection, and/or transmitting the information in a data transmission. Such a data transmission may be transmitted via any suitable means. The providing of information may further comprise storing vehicle information within a database.

An apparatus, such as battery management system 17, control system 6, device 60, vehicle 10, controller 20, vehicle 110, may be configured to receive information. Receiving information may comprise at least one of: forming a data connection, and/or receiving a data transmission. An apparatus may be configured to obtain information, where the obtaining may comprise, for example, querying a database. Further, an apparatus may be configured to detect information. Detection may comprise, for example, parsing data. For example, the apparatus may be configured to parse data received via a data transmission to detect information.

An apparatus, such as battery management system 17, device 60, vehicle 10, controller 20, vehicle 110, may be configured to be controlled. Being controlled may comprise, for example, receiving a control message, and/or performing a task. The apparatus may be configured to adapt its operation responsive to the controlling. For example, the behaviour of the mining vehicle may change based on the controlling.

An apparatus, such as battery management system 17, control system 6, device 60, vehicle 10, controller 20, vehicle 110, a user interface device, an operator interface device, may be configured to control another apparatus. Controlling another apparatus may comprise, for example, formulating a control message, transmitting a control message, controlling battery charging, selecting an autonomous mining vehicle to perform a task, and/or providing an autonomous mining vehicle with battery control information.

In the example embodiments of this disclosure, tasks are used by apparatuses, such as control system 6 or mining vehicle 10, to formulate and communicate orders to various apparatuses. A task may comprise task information. For example, a task may be indicative of an area of a worksite and/or a volume of the worksite. Such an area or volume may be defined in relation to a worksite reference system. A task may be referred to as a planned task, when the task has not yet been started by an apparatus. A task may be communicated by an apparatus as a machine-readable data message, such as a control message. Said data message may comprise, for example, an intended recipient, task information, vehicle information, worksite information, environmental characteristics, and/or historical data. The information within the data message may be provided in one or more fields or headers within said data message.

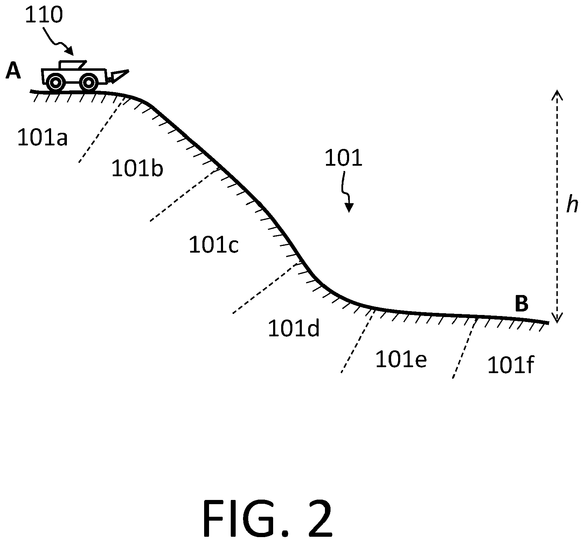

A task may comprise a single task, or a plurality of sub-tasks. An apparatus, such as control system 6 or mining vehicle 10, may be configured to generate one or more sub-tasks based on a task. For example, the apparatus may be configured to generate the one or more sub-tasks responsive to a determination that at least one subtask is to be generated. Determining that at least one subtask is to be generated may comprise, for example, parsing the task. For example, an apparatus may be configured to generate at least one subtask based on a task comprising the instruction "move a load from point A to point B". In the example, the first sub-task could be "proceed to point A", the second could be "obtain a load", and the third could be "proceed to point B with the load". The apparatus may be configured to generate at least one subtask based on geographical sections within a task. For example, the apparatus may be configured to generate subtasks corresponding to predetermined sections such as 10-meter portions of the task. An example of geographical sections of a task is shown in Figure 2. For example, the apparatus may be configured to generate at least one subtask based on a task in response to determining that the task comprises more than one action for the mining vehicle to perform. Generating subtasks based on a task allows for the change of the state of charge to be determined in a more accurate manner.

Tasks may comprise different types of tasks, for example, different types of mining-related tasks. A task may comprise a task for an autonomous mining vehicle. A task for an autonomous mining vehicle may comprise, for example, a task to be performed by the autonomous mining vehicle. Tasks and/or sub-tasks may be ranked by an apparatus such as a control system 6 or mining vehicle 10. The apparatus may be configured to rank tasks and/or sub-tasks based on at least one of the following: date of task, importance of the task, desired execution order, timestamp of previously recorded data, and/or geographical position. An apparatus may be configured to use the ranking to determine an order for any of: task execution, sub-task execution, estimation of a change of a state of charge relative to a task or subtask and/or determination of a target value relative to a task or subtask.

A task may comprise at least one predetermined phase. An apparatus, such as control system 6 or mining vehicle 10, may be configured to perform operations based on a predetermined phase of a task. A predetermined phase of a task may relate to operation of the mining vehicle and/or at least one characteristic of the environment in which the mining vehicle operates. A predetermined phase of a task may comprise, for example, the initiation of performing of the task, the finish of performing of the task, or a change in the at least one characteristic of the environment. In other words, the apparatus may be configured to perform said operations at a certain time instance relative to the task or an event relative to the task such as a change in a characteristic of the environment. The operations to be performed based on the predetermined phase of the task may comprise at least one of: estimating a change of a state of charge of a battery, determining a target value, controlling an autonomous mining vehicle, controlling charging of a battery of an autonomous mining vehicle and/or other functions of the apparatus.

An apparatus, such as a control system 6 or mining vehicle 10, may be configured to detect a task. The detection may comprise querying a database for tasks. The querying may be done based on a vehicle identifier. The detection may further comprise determining, by the detecting apparatus, which vehicle the detected task is intended for. Alternatively or additionally, the detection may comprise receiving a data transmission comprising at least one task.

An apparatus may be configured to estimate a change of a state of charge of the battery of the mining vehicle. The estimating may be done in relation to a task, or in relation to task type. Estimating may be based on, for example, data relating to the mining machine. Estimating may comprise predicting, forecasting, and/or simulating a change of a state of charge of the battery of the mining vehicle. Estimating may comprise, for example, parsing a task and/or determining a state of charge value of a battery of the mining vehicle. The state of charge value may be an actual state of charge value, which expresses the state of charge of a battery. Alternatively, a state of charge value may be a difference value, which expresses the change in a state of charge of a battery. The determination of the state of charge value may comprise calculating the energy the vehicle will consume during the task, and/or the determination may comprise calculating the energy the vehicle will produce during the task. Such calculations may comprise using a mathematical model.

The calculations and determinations described herein, when performed by an apparatus, may utilize at least one mathematical model. The mathematical model may comprise, for example: an equation (such as the work-energy theorem), historical data, a model of a drivetrain of a mining vehicle, a model of the battery of a mining vehicle, a model of a route corresponding to a task, a model of a slope corresponding to a task, an extended Kalman filter (EKF), and/or a recursive algorithm. Such an algorithm may, for example, calculate a state of charge value based on a two-step prediction/update process. The mathematical model may comprise sub-models. The sub-models may be linear and/or nonlinear. Using a mathematical model comprising EKF may be beneficial, as modern batteries may have complex characteristics which are difficult to estimate with simple models. The use of EKF may provide accurate results for a reasonable computational effort.

The apparatus may be configured to use data, for example the data presented in Table 1, as inputs for the mathematical model. For example, a model may use the current and voltage measured from a battery as inputs. The outputs of the mathematical model may comprise, for example, at least one of: state of charge information, dynamic target value, task-specific target parameters, and/or estimated change value of a state of charge. The apparatus may be configured to use a mathematical model, for example, to calculate the energy produced by the mining vehicle, for example, when performing regenerative braking.

An apparatus may be configured to estimate the state of charge based at least in part on data relating to the mining machine. Data relating to the mining machine may comprise different types of data such as data relating to operation of the mining machine, properties of the mining machine such as battery capacity and/or the environment of the mining machine. For example, data relating to the mining machine may comprise task information, vehicle information, load information, worksite information, time data, environmental characteristics, and/or historical data. Table 1 illustrates some of the data types and corresponding subtypes usable in the estimating. At least one of the data types or any combination thereof may be used in the estimation as appropriate.

### Table 1. Data types usable with the embodiments.

| ***Data type*** | *Possible subtypes* | *Examples* |
|---|---|---|
| Task information | | Task importance |
| | Task type | Drilling |
| | Task location data | Route relating to task |
| | Control instructions | Action for the vehicle to perform |
| | Route information | Number of turns along route |
| Environmental characteristic | Geographical feature | Height differential of slope 3D coordinates |
| | Mapping data | |
| | Weather data | Temperature of worksite |
| Vehicle information | | Mass of the vehicle |
| | Battery information | Current battery charge |
| | Location information | Current location of vehicle |
| | Vehicle type | Type of vehicle |
| Load information | Load type | Ore |
| | Load mass | Mass in kilograms |
| | Load distribution | |
| | Load volume | Volume in m³ |
| Historical data | | State of charge data relating to a previously completed task |

A task comprises task information, which may comprise at least one of: task type, task location data, route information, and/or control instructions. Task information may further comprise: task execution time, and/or task importance.

The task type may comprise at least one of: navigating, data handling, load handling, mining operations and/or battery management types of tasks. An example of a navigating task comprises, for example, moving to a location. Examples of data handling tasks comprise, for example, transmitting data, receiving data, connecting to a base station, and/or connecting to a mining vehicle. Examples of load handling tasks comprise, for example, hauling to a specified location, emptying a load, loading, and/or transferring loads. Examples of mining operations tasks comprise, for example, drilling, excavating, and/or scaling. Examples of battery management tasks comprise, for example, charging at a charging point, and/or altering battery charge.

The task location data may comprise at least one of: target location data, global coordinates, worksite coordinates, and/or local coordinates. Said data may relate to the actions within the task. For example, the task location data may comprise a location for performing an action.

The control instructions may comprise instructions for the vehicle related to an action. Said instructions may comprise, for example, a function of the vehicle and/or an action for the vehicle to perform. For example, the control instructions may comprise mining vehicle utility device control data for controlling at least one actuator of the mining vehicle at associated locations to perform a desired mining operation. The control instructions may comprise, for example, control data, such as bucket and/or boom profile data. Such control data may be used, for example, by an apparatus to control a mining vehicle so that the vehicle is caused to load a bucket at a loading area. The control instructions may comprise instructions for a mining vehicle to adjust operational parameters. Operational parameters may comprise at least one of: speed, battery charging speed or motor braking parameters.

The route information may comprise information corresponding to an intended route of the vehicle in relation to a task. The apparatus may be configured to use route information to determine environmental characteristics corresponding to a route. Route information may comprise, for example, waypoints, trajectories, routes, route plans, driving plans, the amount of turns on the route, a target speed value for the route, the start point of the route, and/or the end point of the route. The route information may be expressed as one or more route segments, where said segments comprise the route information relating to each segment.

In some embodiments, the apparatus, such as control system 6 or mining vehicle 10, is configured to utilize information on at least one environmental characteristic relating to a task. For example, the apparatus may be configured to utilize information on at least one environmental characteristic to estimate a change of state of charge of a battery. A task may comprise information on an environmental characteristic (a characteristic of the environment). Such an environmental characteristic is related to the task environment, for example, the worksite environment. The apparatus may be configured to parse a task so that at least one environmental characteristic is obtained from the task. As another example, the apparatus may be configured to obtain information on at least one environmental characteristic based on the task information. As a further example, the apparatus may be configured to receive information on at least one environmental characteristic, for example from the worksite management system. Environmental characteristics are beneficial to use in the presently disclosed embodiments, for at least the reason that it is possible to determine which locations of the worksite require the most energy from the mining vehicles. In accordance with the autonomous modes of operation discussed above, an apparatus such as control system 6 or mining vehicle 10, has access to data comprising at least some of the environmental characteristics of the worksite.

An environmental characteristic may comprise, for example, a geographical feature, weather data, and/or mapping data. Mapping data may comprise environmental data, such as coordinates, obtained via the above-mentioned scanning or dead reckoning. The apparatus may be configured to determine the above-mentioned geographical features from mapping data, for example, from a worksite model.

An environmental characteristic may comprise a geographical feature. A geographical feature may comprise, for example, location data, position data, a distance between geographical locations, a height between geographical locations, a slope grade, a slope profile, a curve, a downward slope and/or an upward slope. The apparatus may be configured to derive one or more geographical features from at least one environmental characteristic, for example, from environmental data obtained via the above-mentioned scanning or dead reckoning.

Another example of an environmental characteristic, an apparatus may be configured to use, is weather data. Weather data may comprise, for example, forecasts, measured weather data, and/or time-based phenomena. Weather data may affect the state of charge in various ways, for example, when the driving surface is wet or icy, more energy is needed to travel than on a dry surface. In such cases, the apparatus may be configured to apply a factor to account for the change of energy use and/or production. For example, a "wetness factor", such as 5%, may be applied to at least a part of the task. Such factors may be applied in an interpolated manner, for example to account for gradual transitions from icy to non-ice when temperatures rise. The apparatus may be configured to use coulomb friction, with predetermined friction coefficients, to calculate friction corresponding to weather data. For example, the apparatus may be configured to take into account time-based weather phenomena such as lower temperatures during the night, and/or dew in the morning.

Vehicle information may comprise, for example, battery information, location information relating to the vehicle, and/or a type of the vehicle. Vehicle information may further comprise, for example, mass of the vehicle, and/or an identifier of the vehicle.

Battery information may comprise, for example, battery identification (ID) information, battery state information, battery charging information, and/or battery capacity information.

Battery identification information may comprise, for example, battery ID, date of manufacture of the battery and/or location of the battery.

Battery state information may comprise, for example, a state of charge (SOC) or depth of discharge (DOD) indicating the charge level of the battery, a state of health (SOH) indicating the remaining capacity of the battery as a percentage value of the original capacity, a state of power (SOP) indicating the amount of power available for a defined time interval given the current power usage, temperature and other conditions, state of safety (SOS),

Battery charging information may comprise, for example, time elapsed since the last charge, temperature of the battery, coolant flow, current flowing in or out of the battery, voltage such as minimum and/or maximum cell voltage, energy [kWh] delivered since last the charge or charge cycle, internal impedance of a cell (to determine open circuit voltage), charge [Ah] delivered or stored (sometimes this feature is called Coulomb counter), total energy delivered since first use, total operating time since first use, and/or total number of charge cycles. A charge cycle comprises an amount of used energy that equals 100% of the battery's capacity.

Battery capacity information may comprise, for example, a maximum charge current as a charge current limit (CCL) and/or a maximum discharge current as a discharge current limit (DCL).

In some embodiments, the apparatus, such as control system 6 or mining vehicle 10, may be configured to utilize load information. For example, an estimation of a change of state of charge of a battery may comprise the utilization of load information. Load information may comprise, for example: a mass of a load, a type of a load, a distribution of a load, and/or a volume of a load. A mass of a load may comprise a mass value corresponding to an onboard load and/or an offboard load. A type of a load may comprise, for example, information corresponding to the material of the load and/or information related to said material, such as density of the material. A distribution of a load may comprise, for example, information corresponding to the placement of the load on the vehicle, and/or information corresponding to movement of the load during movement of the vehicle. A volume of a load may comprise a value corresponding to a volume of the load. The apparatus may be configured to measure, generate, select historical load information and/or estimate the load information.

In some embodiments, the apparatus, such as control system 6 or mining vehicle 10, may be configured to utilize historical data. For example, an estimation of a change of state of charge of a battery may comprise the utilization of historical data. Historical data may comprise, for example, a historical state of charge value. A historical state of charge value may be a value which has been recorded when tasks have been previously performed. The value may be recorded by the same mining vehicle, or a different mining vehicle. The value may be recorded relating to the same task, or a different task. For example, if the vehicle is instructed, via at least one task, to travel between two points, data from the first trip may be used to estimate the change of the state of charge for any subsequent trips. For example, trips performed by a different mining vehicle may be used to estimate the change of the state of charge for any subsequent trips. Alternatively, the historical state of charge value may comprise a previously calculated state of charge value.

In some embodiments, time data may be utilized by an apparatus such as control system 6 or mining vehicle 10. Time data may comprise, for example, a time instance, a time of day, an elapsed time value and/or a target time value.

An apparatus may be configured to determine a target value for the state of charge of the battery of a mining vehicle relative to a task. The determination may be based on the estimated change of a state of charge. The apparatus may be configured to determine a target value for a state of charge of the battery for a phase of the task such as a target value for a state of charge of the battery at an initiation of performing of the task, at a finish of performing of the task and/or responsive to a change in the at least one characteristic of environment.

A target value may comprise a dynamic target value. By "dynamic" it is meant that the target value may be determined depending on current conditions. The target value may indicate a level of state of charge which will allow the vehicle to complete the task. A dynamic target value may be indicated, for example, as a percentage value of the capacity of the battery, and/or in kilowatt-hours. The dynamic target value thus may comprise a lower limit or upper limit, where the upper limit is usable when the task involves motor braking which may increase the state of charge during the task. An example of the dynamic target value may be 49% of the state of charge. The dynamic target value may be determined prior to the execution of the task.

For example, and with reference to Fig. 1, when a vehicle travels over the sloped portion 2a, the sloped portion will affect the state of charge of the battery of the vehicle. Namely, if the vehicle is traveling upslope (from right to left in Fig. 1), the battery charge will be depleted more rapidly than when the vehicle is travelling on level terrain. In the case where the vehicle is travelling downslope, for example, downhill, the battery charge will be increased when a regenerative mode such as regenerative braking is used. In a regenerative mode, the motion of the vehicle is used to increase the state of charge of the battery of the vehicle. In the case of regenerative braking, for example, the electric motor functions as a generator powered by the motion of the wheels of the vehicle, where the produced energy is stored in the battery. It follows that a desired state of charge should be high when the task will involve upslope travel, and when the task involves downslope travel, the desired state of charge should be low (to accommodate the energy generated from braking).

FIGURE 2 shows a mining vehicle 110 such as an autonomous mining vehicle that is about to proceed down a slope 101. The apparatus, such as the vehicle 110 and/or the control system 6, may be configured to determine the effect of traversing slope 101 on the state of charge of the battery of the mining vehicle in advance. Slope 101 has a height differential *h,* which may be expressed in meters. The differential *h,* being a geographical feature, may be known to the apparatus, for example, from the environment model. The task provided to vehicle 110 may comprise the geographical feature *h.* In an alternative, the apparatus may be configured to derive said geographical feature from an environmental characteristic, such as mapping data.

Further, the slope profile of slope 101 may be known to the apparatus, based on, for example, the environment model. The apparatus may be configured to determine an environmental characteristic. The apparatus may be configured to determine a grade of said slope for each portion of the slope 101. An example of determining an environmental characteristic comprises determining the height differential of a slope. The apparatus may be configured to determine at least one environmental characteristic relating to a task. In the example of Fig. 2, a task comprises a route plan (route from A to B, as shown in Fig. 2) which includes a slope in this example. Thus, the apparatus may be configured to determine that the environmental characteristics of the route comprise a slope. However, the at least one environmental characteristic need not be determined every time. If, for example, the height differential is known, then the known height differential may be used. In the figure, slope 101 is shown divided into sections 101a-101f, which sections are separated by illustrative dotted lines. The apparatus may be configured to determine environmental characteristics such as height differential and grade for each portion independently. As can be seen in the figure, the mining vehicle is located at location A. Location B is situated at the bottom of a slope. A task may comprise control instructions comprising an instruction for the mining vehicle to travel the route from A to B.

As the mining vehicle will be going down slope 101 to reach point B, the apparatus may be configured to determine the effect of traversing slope 101 on the state of charge of the battery of the mining vehicle in advance. A benefit of such an advance determination is that undesired situations may be avoided, such as a situation where the battery is so full of charge that regenerative braking cannot be performed. The apparatus may be configured to determine the effect of traversing slope 101 on the state of charge of the battery of the mining vehicle for each section, for example as follows: calculating a value corresponding to the effect of the section 101a on the state of charge of the battery, then calculating a value corresponding to the effect of each subsequent section on the state of charge of the battery and optionally taking into account the value of the previous section. This type of section-by-section or portion-by-portion calculation is suitable for use with different types of tasks and provides a beneficial effect that reaching an undesired value of the state of charge such as full or zero may be avoided. For example, if the battery state of charge becomes full or close to full in section 101b, then the calculation may be stopped by an apparatus, as the task cannot be accomplished in accordance with acceptable parameters. In such a situation, the apparatus may be configured to control the mining vehicle during the task in such a manner that the state of charge or operation of the mining vehicle is adjusted before the task is continued.

In situations like those illustrated in Figure 1 and Figure 2, the apparatus may be configured to control the mining vehicle by instructing the mining vehicle to alter the state of charge of its battery, for example, before or during the task. The apparatus may be configured to control the mining machine by transmitting a control message comprising control instructions for the mining vehicle. For example, the apparatus, such as control system 6 or a mining vehicle controller, may be configured to instruct the mining vehicle 110 of Fig. 2 to alter the charge of its battery. The control may be based on an estimation of a change of a state of charge of the battery or a determination of a target value. For example, the control could take into account an estimation of the change of a state of charge corresponding to the vehicle travelling from A to B. The control may comprise, for example, instructing the vehicle to travel to another location before performing the task. In this manner, the state of charge may be reduced enough so that the task may be performed. As another example, the controlling may comprise determining an action for the mining vehicle which will allow the task to be performed, such as "travel 50 meters in one direction and return to this position".

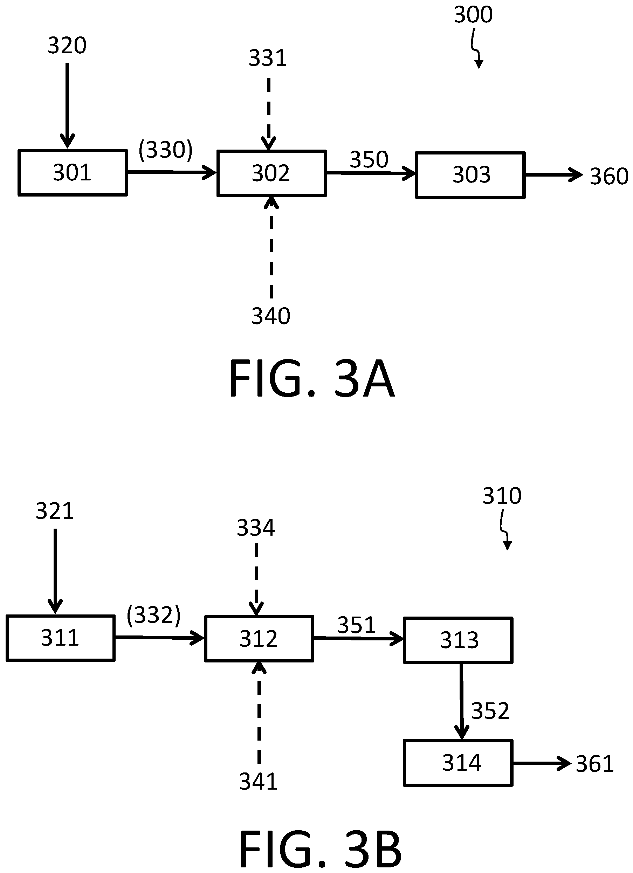

FIGURE 3A illustrates a method 300, incorporating aspects of at least some embodiments. More specifically, the method 300 illustrates controlling at least one autonomous mining vehicle. The method may comprise a computer-implemented method performed by an apparatus. For example, at least one of apparatuses 6, 60, 10, 20, 110, may be configured to perform the method 300.

In the method 300, task 320 is detected by the apparatus performing the method in phase 301. The detection of the task may comprise querying a database for tasks and/or receiving a data transmission comprising at least one task. The detection phase 301 may comprise parsing a task so that at least one environmental characteristic is obtained from the task. The detection phase 301 may comprise obtaining at least one environmental characteristic based on the task information. In Figure 3, environmental characteristic 330 is obtained from the task information. As another example, the detection phase 301 may comprise receiving information on at least one environmental characteristic. The received environmental characteristic may comprise a characteristic received separately from detecting the task.

In the method 300, a change of a state of charge 350 is estimated in phase 302. Estimating a change of a state of charge 350 may comprise, for example, determining a state of charge difference based on the expected energy consumption and/or production of the vehicle. The determination may be based on, for example, the work energy theorem. Data, such as at least one of: task information, vehicle information, worksite information, time data, environmental characteristics, and/or historical data, may be used in the estimation.

Further, at least one environmental characteristic 331 may be used as part of the estimating within phase 302. An environmental characteristic may comprise, for example, weather data, which may be provided by the worksite management system. Environmental characteristic 331 may thus comprise a characteristic which is not directly related to the task or the mining vehicle, but which will affect the estimation.

Further, in phase 302, battery information 340 may be detected. The detection may comprise receiving a data transmission. The battery information may be detected, for example, from a battery management system, BMS. The detected battery information may then be used as part of the determination of the state of charge difference based on the expected energy consumption and/or production of the vehicle. For example, the current battery state of charge of the vehicle may be used, along with the estimated state of charge value, to determine an actual state of charge value the vehicle after completion of the task. In other words, if the battery is currently fully charged, and the task will take a certain amount of battery charge, the amount of charge after the task may be calculated using these values.

In phase 303, the estimated state of charge value 350 is used to control at least one apparatus, such as an autonomous mining vehicle, via a control message 360. A control message 360 may comprise, for example, the estimated value 350 and/or control instructions. Controlling at least one mining vehicle may comprise at least one of: transmitting a control message, controlling battery charging, selecting an autonomous mining vehicle to perform the task, and/or providing an autonomous mining vehicle with battery control information. An apparatus receiving the control message 360 may be configured to adapt its operation based on the control message.

FIGURE 3B illustrates another method 310. Method 310 is similar to the method 300, but method 310 further incorporates a phase 313, which is a target value determination phase. In method 310, the phase 311 corresponds to phase 301 of the method 300. Likewise, the phases 312 and 314 correspond to phases 302 and 303, respectively. Task 321 corresponds to task 320. Environmental characteristics 332 and 334 correspond to environmental characteristics 330 and 331, respectively. Battery information 341 corresponds to battery information 340.

Phase 313 comprises determining a target value 352 for a state of charge of the battery of the vehicle. The determination of the target value is based on an estimated change of a state of charge 351 estimated in phase 312. The target value 352 comprises a state of charge of the battery, for example, at a predetermined phase of the task.

In phase 313, the determined target value 352 is used to control at least one mining vehicle via control message 361. Control message 361 may comprise, for example, the determined target value 352, the estimated value 351, and/or control instructions. Controlling may comprise at least one of: transmitting a control message, controlling battery charging, selecting an autonomous mining vehicle to perform the task, and/or providing an autonomous mining vehicle with battery control information. An apparatus receiving the control message 361 may be configured to adapt its operation based on the control message.

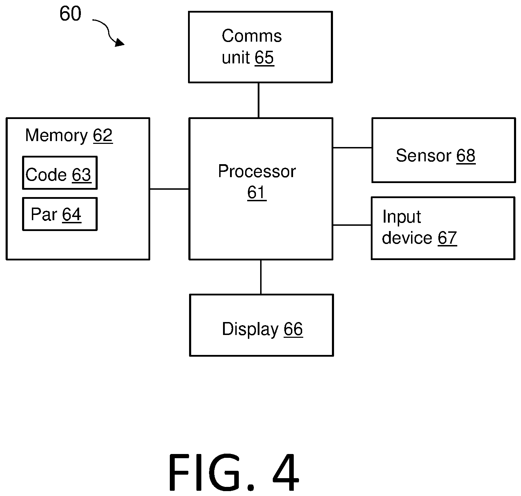

FIGURE 4 illustrates a block diagram depicting an example apparatus capable of supporting at least some embodiments of the present invention. In the example of FIGURE 4, the apparatus is a device 60, which may be configured to perform at least some of the above-illustrated embodiments. In some embodiments, the device 60 comprises or implements the battery management system 17, control system 6, controller 20, a worksite management system, a server, or other module(s), functions and/or unit(s) for performing at least some of the above-illustrated embodiments.

Comprised in the device 60 is a processor 61, which may comprise, for example, a single- or multi-core processor. The processor 61 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 60 may comprise memory 62. The memory may comprise random-access memory and/or permanent memory. The memory may be at least in part accessible to the processor 61. The memory may be at least in part comprised in the processor 61. The memory may be at least in part external to the device 60 but accessible to the device. The memory 62 may be means for storing information, such as parameters 64 affecting operations of the device. The parameter information in particular may comprise parameter information affecting the battery related features, such as state of charge values.

The memory 62 may be a non-transitory computer readable medium comprising computer program code 63 including computer instructions that the processor 61 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated features in the device, such as the methods of Figures 3A and 3B.

The device 60 may comprise a communications unit 65 comprising a transmitter and/or a receiver. The transmitter and the receiver may be configured to transmit and receive, respectively, for example, data and control commands within or outside the vehicle. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, a non-terrestrial communication standard, and/or Ethernet standards, for example. The device 60 may comprise a near-field communication, NFC, transceiver. The NFC transceiver may support at least one NFC technology, such as NFC, Bluetooth, or similar technologies.

The device 60 may comprise or be connected to a UI. The UI may comprise at least one of a display 66, a speaker, an input device 67 such as a keyboard, a joystick, a touchscreen, and/or a microphone. The UI may be configured to display views on the basis of above illustrated embodiments. A user may operate the device and control at least some of above illustrated features. In some embodiments, the user may control the vehicle 10 via the UI, for example, to manually drive the vehicle, operate a boom, change a driving mode, change display views, modify parameters 64, and/or the like.

The device 60 may further comprise and/or be connected to further units, devices and systems, such as one or more sensor devices 68, such as the scanner(s) 40 or other sensor devices configured to sense environment of the device 60 or properties of the vehicle, such as wheel rotation or orientation changes.

The processor 61, the memory 62, the communications unit 65 and the UI may be interconnected by electrical leads internal to the device 60 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

An apparatus, such as a mining vehicle, the control system 6 and/or the device 60, comprising at least one processor 61 and at least one memory 62 including computer program code 63, may be configured to: detect a task for an autonomous mining vehicle comprising a battery, the task comprising task information related to the task. The apparatus may be further configured to receive information on at least one characteristic of environment relating to the task.

The apparatus may be further configured to estimate, based on the task information and the information on the at least one characteristic of the environment, a change of a state of charge of the battery of the autonomous mining vehicle, wherein said change of a state of charge is related to the task. Estimating a change of a state of charge may comprise, for example, calculating a state of charge difference based on the expected energy consumption and/or production of the vehicle. The received and/or obtained data, such as task information, vehicle information, worksite information, environmental characteristics and/or historical data, may be used for estimating a change of a state of charge of a battery. Estimating may further comprise using a historical change of a state of charge within historical data in order to estimate the change of a state of charge. Estimating may further comprise using load information in order to estimate the change of a state of charge. Such load information may be measured, received, generated or estimated by the apparatus or it may be included, for example, in the task information.

The apparatus may be further configured to determine, based on the estimated change of a state of charge, a target value for a state of charge of the battery of the autonomous mining vehicle. The determined target value may comprise a state of charge of the battery, for example, at a predetermined phase of the task. For example, the apparatus may be configured to determine the target value for the state of charge of a battery of a vehicle at at least one of the following phases of a task: before the task, during the task and/or after the task. This allows the apparatus to determine, for example, if the vehicle can start the task, and/or if the battery state of charge will be at a sufficient level after the task.

The apparatus may be further configured to control at least one autonomous mining vehicle based on the determined target value. Controlling may comprise transmitting a control message, which may comprise, for example, a determined target value, an estimated change of a state of charge, control instructions, task information, vehicle information, worksite information, environmental characteristics and/or historical data. Further, the controlling may comprise, for example, controlling battery charging, selecting an autonomous mining vehicle to perform the task and/or providing an autonomous mining vehicle with battery control information.

The apparatus may be configured to utilize the at least one characteristic of environment (environmental characteristic) in the estimation of a change of a state of charge and/or in the determination of a target value. The environmental characteristic may comprise, for example, at least one of: a geographical feature, weather data, forecast weather data, and/or time data. An environmental characteristic may be, for example, received, detected, parsed from a task, and/or obtained by the apparatus. A geographical feature may comprise at least one of the following: a downward slope, an upward slope, and/or a curve. Said geographical feature may correspond to the task environment.

The apparatus may be configured to utilize load information in the estimation of a change of a state of charge and/or in the determination of a target value. Load information may comprise, for example: a mass of a load, a type of a load, a distribution of a load, and/or a volume of a load. The apparatus may be configured to receive, detect, parse from a task, and/or obtain load information. For example, the apparatus may be configured to generate load information when the mining vehicle is loaded. The apparatus may be configured to calculate a load mass which corresponds to a change of a state of charge and/or a determined target value. For example, the apparatus may be configured to calculate a suitable load for a mining vehicle relative to a task, whereby the mining vehicle will be able to perform the task with the state of charge of the vehicle remaining within accepted parameters such as task-specific target parameters.

The apparatus may be further configured to determine, based on the at least one characteristic of environment, energy to be generated by the at least one autonomous mining vehicle while performing the task. Such energy may comprise energy generated by the autonomous mining vehicle, for example when operating in a regenerative mode, for example regenerative braking and/or motor braking.

The apparatus may be further configured to determine, based on the at least one characteristic of environment, energy to be consumed by the at least one autonomous mining vehicle while performing of the task. The apparatus may be further configured to determine, based on the at least one characteristic of environment, an estimated amount of energy needed by the at least one autonomous mining vehicle while performing the task. The estimated amount of energy needed may correspond to the determined energy consumption. The apparatus may be configured to apply a factor, for example a safety margin, to the determined energy consumption as part of determining the estimated amount of energy needed by the at least one autonomous mining vehicle.

The apparatus may be further configured to control battery charging of the at least one autonomous mining vehicle. The control of charging may comprise, for example, causing the vehicle to charge a battery, swap a battery, and/or sending a control message to the autonomous mining vehicle. The apparatus may be configured to determine if the state of charge of the battery of the mining vehicle should be altered. Such a determination may be done based on at least one of: the estimated change of a state of charge, the determined target value, and/or battery information. Such a determination may comprise comparing the determined target value with the actual state of charge value of a mining vehicle. Further, the apparatus may be configured to send a control message comprising instructions to the mining vehicle to alter the state of charge of the battery of the mining vehicle. The altering can comprise, for example: using a charging station, travelling back and forth, performing another task and/or using an actuator. For example, the apparatus may be configured to control a pump for converting energy into heat.

The apparatus may be further configured to control the operation of the at least one autonomous mining vehicle. The control of operation of the at least one autonomous mining vehicle may comprise, for example, controlling one or more of the functions of the autonomous mining vehicle, and/or sending a control message to the autonomous mining vehicle. The control of operation may comprise causing the autonomous mining vehicle to adapt its operation such as to control driving of the autonomous mining vehicle. Controlling driving of the autonomous mining vehicle may comprise, for example, controlling speed such as increasing or decreasing speed, controlling acceleration, or the like.

The apparatus may be configured to select a vehicle, such as a mining vehicle, based on an estimation of a change of a state of charge of the battery of the autonomous mining vehicle. The selection may be done from a group comprising a plurality of vehicles. For example, the effect of a task on a state of charge of a battery of a mining vehicle may be estimated, and a mining vehicle having a suitable state of charge may be selected to perform said task. The effect of the travel of the vehicle to/from the task location on the state of charge of the battery may be taken into account in the selection.

The apparatus may be further configured to determine the target value for each sub-task within the task. The apparatus may be further configured to determine if at least one subtask should be generated based on the task. The apparatus may be configured to generate at least one subtask based on the task. The apparatus may be configured to generate the at least one subtask while taking route information into account. The route information may comprise, for example, a route between the position of the mining vehicle and the task location, a route between the position of the mining vehicle and a charging point, and/or a route between the task location and a charging point. The apparatus may be further configured to estimate a first change of the state of charge of the battery of the mining vehicle with respect to a first subtask of the task. The apparatus may be further configured to estimate a second change of the state of charge of the battery of the mining vehicle with respect to a second subtask of the task. Estimating the second change of the state of charge may be based at least in part on estimating the first change of the state of charge with respect to the first subtask. Estimating a change of a state of charge of a battery may comprise calculating an estimated change value of the state of charge of the battery. The apparatus may be configured to calculate estimated change values for a plurality of subtasks. For example, the apparatus may be configured to calculate an estimated change value of the state of charge for each *n* subtask of the task, where *n* is a positive integer larger than 1. The calculation for each *n* subtask may be based at least in part on the calculation of each preceding subtask, that is to say the *n-1* subtask of the task.

The apparatus may be configured to determine the effect of charging operations on the state of charge, for example, relative to at least one predetermined phase of the task. In other words, the apparatus may be configured to determine whether it is beneficial to increase the state of charge of the battery of a vehicle, for example, before, during, and/or after the task. The apparatus may be configured to receive information on a charging point that is available while performing the task and adjust the target value based on the information on the charging point. The apparatus may be configured to compare location data relating to the task with location data relating to a charging point.

The apparatus may comprise at least one of: a controller of a mining vehicle, a mining vehicle, a worksite management system, a user interface device, a battery management system, a control system, and/or an operator interface device.

The apparatus may be configured to determine task-specific target parameters for the state of charge of the battery of a mining vehicle relative to a task. The parameters may indicate a range for state of charge which will allow the vehicle to complete the task. The parameters may be indicated, for example, as a range of percentage of the capacity of the battery, and/or in kilowatt-hours. An example of the task-specific target parameters may be 10% - 84% of the state of charge. The parameters may differ depending on the task, the conditions, future conditions such as weather forecasting, the mining vehicle and information related therein. Determination of the parameters allow the task to be completed while ensuring that the mining vehicle will be available to complete subsequent tasks as well. The apparatus may be configured to locate, from an estimated change, at least one maximum and at least one minimum of the estimated change of the state of charge throughout the task. The apparatus may be further configured to compare said at least one maximum and said at least one minimum to accepted parameters, such as the above-mentioned task-specific target parameters. Such locating is suitable for use with all types of tasks, and provides a beneficial effect that the state of charge does not momentarily reach an undesired value such as full or zero. The locating may be done using suitable mathematical methods such as derivation (the derivative test).

The apparatus may be configured to store and/or receive data in at least one of: a database, and/or a lookup table. Such data may comprise any of the data presented in Table 1. For example, the database and/or lookup table may comprise at least one of: precalculated values, and/or historical data. The contents of the database and/or lookup table may relate to any of the information described herein.

Advantages of the present disclosure include the following: Typically, mining vehicles travel long distances, which may also include significant height differentials. Therefore, state of charge management of batteries of mining vehicles, such as electric mining vehicles, as provided herein is useful to ensure productivity and that the mining vehicles do not run out of charge during tasks. Further, when a mining vehicle travels downhill, the state of charge should not be so high as to prevent regenerative motor braking. When the environment, machine capacity and task are known, for example, by the worksite management system, the embodiments of the present disclosure allow operating in an efficient manner so that energy is not wasted.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in controlling mining vehicles, especially electric mining vehicles.

**REFERENCE SIGNS LIST**

| | |
|---|---|
| 1 | Mining worksite |
| 2 | Tunnel |
| 2a | Sloped portion |
| 2b | Flat portion |
| 4 | Base station |
| 6 | Control system |
| 10, 110 | Vehicle |
| 11 | Bucket |
| 12 | Boom |
| 13 | Joint |
| 14 | Hydraulic system |
| 15 | Motor |
| 16 | Battery |
| 17 | Battery management system |
| 20 | Control unit |
| 30 | Communication device |
| 40 | Scanner |
| 60 | Apparatus |
| 61 | Processor |
| 62 | Memory |
| 63 | Code |
| 64 | Parameters |
| 65 | Communication unit |
| 66 | Display |
| 67 | Input device |
| 68 | Sensor |
| 101 | Slope |
| 100a - 101f | Slope section |
| 300, 310 | Method |
| 301, 311, 302, 312,313,303, 314 | Phase of method |
| 320, 321 | Task |
| 330, 331, 332, 334 | Environmental characteristic |
| 340, 341 | Battery information |
| 350, 351 | Change of state of charge |
| 360, 361 | Control message |
| 352 | Target value for state of charge |

## Claims

1. An apparatus for controlling at least one autonomous mining vehicle, the apparatus comprising at least one processor and at least one memory including computer program code, the at least one memory and the computer program code configured to with the at least one processor, cause the apparatus at least to:
- detect a task for an autonomous mining vehicle comprising a battery, the task comprising task information related to the task;
- receive information on at least one characteristic of environment relating to the task;
- estimate, based on the task information and the information on the at least one characteristic of the environment, a change of a state of charge of the battery of the autonomous mining vehicle, wherein said change of a state of charge is related to the task;
- determine, based on the estimated change of the state of charge, a target value for a state of charge of the battery of the autonomous mining vehicle, the target value comprising a state of charge of the battery at a predetermined phase of the task; and
- control at least one autonomous mining vehicle based on the determined target value.

2. The apparatus of claim 1, wherein estimating the change of the state of charge comprises determining, based on the at least one characteristic of environment, energy to be generated by the at least one autonomous mining vehicle while performing the task.

3. The apparatus of claim 2, wherein the energy generated by the at least one autonomous mining vehicle while performing the task comprises energy generated by the autonomous mining vehicle when operating in a regenerative mode.

4. The apparatus of any preceding claim, wherein estimating the change of the state of charge comprises determining, based on the at least one characteristic of environment, energy to be consumed by the at least one autonomous mining vehicle while performing the task.

5. The apparatus of any preceding claim, wherein estimating the change of the state of charge comprises determining, based on the at least one characteristic of environment, an estimated amount of energy needed by the at least one autonomous mining vehicle for performing the task.

6. The apparatus of any one of the preceding claims, wherein the environmental characteristic comprises at least one of: a geographical feature, weather data, forecast weather data, or time data.

7. The apparatus of claim 6, wherein the geographical feature comprises at least one of the following: a downward slope, an upward slope, or a curve.

8. The apparatus of any one of the preceding claims, wherein controlling the at least one autonomous mining vehicle comprises controlling battery charging of the at least one autonomous mining vehicle.

9. The apparatus of any one of the preceding claims, wherein controlling the at least one autonomous mining vehicle comprises controlling operation of the at least one autonomous mining vehicle.

10. The apparatus of any one of the preceding claims, wherein the task comprises at least one sub-task, and wherein the at least one memory and the computer program code are configured to, with the at least one processor, cause the apparatus to determine the target value for each sub-task within the task.

11. The apparatus of any one of the preceding claims, wherein the at least one memory and the computer program code are configured to, with the at least one processor, cause the apparatus to: receive information on a charging point that is available while performing the task, and adjust the target value based on the information on the charging point.

12. The apparatus of any one of the preceding claims, wherein the apparatus comprises at least one of: a controller of the mining vehicle, the mining vehicle, a worksite management system, or a user interface device.

13. A method for controlling at least one autonomous mining vehicle, the method comprising:
- detecting a task for an autonomous mining vehicle comprising a battery, the task comprising task information related to the task;
- receiving information on at least one characteristic of environment relating to the task;
- estimating, based on the task information and the information on the at least one characteristic of the environment, a change of a state of charge of the battery of the autonomous mining vehicle, wherein said change of a state of charge is related to the task;
- determining, based on the estimated change of the state of charge, a target value for a state of charge of the battery of the autonomous mining vehicle, the target value comprising a state of charge of the battery at a predetermined phase of the task; and
- controlling at least one autonomous mining vehicle based on the determined target value.

14. The method of claim 13, wherein the method comprises determining, based on the at least one characteristic of environment, energy to be generated by the at least one autonomous mining vehicle while performing the task.

15. A computer program comprising computer program code for, when executed in a data processing apparatus, to cause the apparatus to perform any of the methods of claims 13 - 14.
